# EUROPÄISCHE PATENTSCHRIFT

(11) **EP 0 519 233 B1**
(45) Veröffentlichungstag und Bekanntmachung des Hinweises auf die Patenterteilung: **09.11.1994**
(21) Anmeldenummer: 92108763.1
(22) Anmeldetag: 25.05.1992
(51) Int. Cl.: B23B 51/10

(54) **Bohrwerkzeug mit im Abstand zur Schneidspitze höhenverstellbaren Zusatzschneiden**
Drilling tool with a countersinking device adjustable in height
Outil de perçage ayant un dispositif de chanfreinage ajustable en hauteur

(30) Priorität: 20.06.1991 DE 4120436
(43) Veröffentlichungstag der Anmeldung: 23.12.1992
(73) Patentinhaber: A L M Ü PRAZISIONSWERKZEUG GmbH, 73119 Zell (DE)
(72) Erfinder: Geyer, Gernot, W-7440 Nürtingen (DE); Müller, Alfred, W-7306 Denkendorf (DE); Frank, Günter, W-7340 Geislingen-Türkheim (DE)
(74) Vertreter: Seemann, Norbert W., Dipl.-Ing.

(56) Entgegenhaltungen:
- DE-A- 3 610 016
- DE-C- 610 835
- US-A- 2 649 001
- US-A- 2 869 406
- US-A- 4 343 577

## Beschreibung

Die Erfindung bezieht sich auf ein Bohrwerkzeug nach dem Oberbegriff des Patentanspruches 1, siehe DE-A-3 610 016.

Bohrwerkzeuge mit mindestens einem im Abstand zur Schneidspitze höhenverstellbar am Schneidteil gelagerten Zusatzschneidglied sind seit Jahrzehnten bekannt. So zeigt die DE-PS 610 835 einen Gewindebohrer mit einem zugeordneten Zusatzschneidglied, hier speziell ein Abgratmesser, wobei zur stetigen altmählichen Wegnahme des beim Gewindebohren entstehenden Grates das Abgratmesser unter Federdruck stets längs verschiebbar am Schneidteil des Gewindebohrersgehaltert ist.

Zum Fasen, Senken, Planen, Aufbohren o. dgl. ist diese Ausführung jedoch nicht geeignet. Ausführungsvarianten eines Bohrwerkzeuges für derartige Arbeiten sind u.a. aus der DE-PS 36 10 016, der EP-OS 0 391 695 und der US-PS 3 575 520 in der Form bekannt, daß die eigentlichen Zusatzschneidglieder in einem gesonderten Klemmring befestigt sind und letzterer mittels Klemmschrauben lösbar und dadurch höhenverstellbar das Schneidteil des jeweiligen Bohrwerkzeuges auf dessen vollem Umfang umgreift.

Der wesentlichste Nachteil einer solchen Ausführung liegt aber neben großem baulichen Aufwand vor allem noch darin, daß der Stellring einerseits bei engen Arbeitsverhältnissen störend im Wege ist und andererseits noch die Spanabfuhr beim Bohren behindert.

Die Aufgabe der vorliegenden Erfindung besteht deshalb auch darin, ein in seinem Aufbau einfaches und damit preiswertes sowie betriebssicheres System zu schaffen, das gleichermaßen bei gerade- sowie spiralgenuteten Bohrwerkzeugen Anwendung finden kann.

Gelöst wird diese Aufgabe nunmehr durch das im Patentanspruch 1 angegebene grundlegende bauliche und anordnungsgemäße Prinzip. Die Unteransprüche beinhalten vorteilhafte Weiterbildungen bzw. Alternativen des erfinderischen Grundgedankens.

Die Zeichnung deutet ein Ausführungsbeispiel der Erfindung an; es zeigen im einzelnen:
- Fig. 1: das erfindungsgemäße Bohrwerkzeug in Ansicht und
- Fig. 2: eine Schnittdarstellung zu Fig. 1 gemäß der Linie A - A in vergrößertem Maßstab.

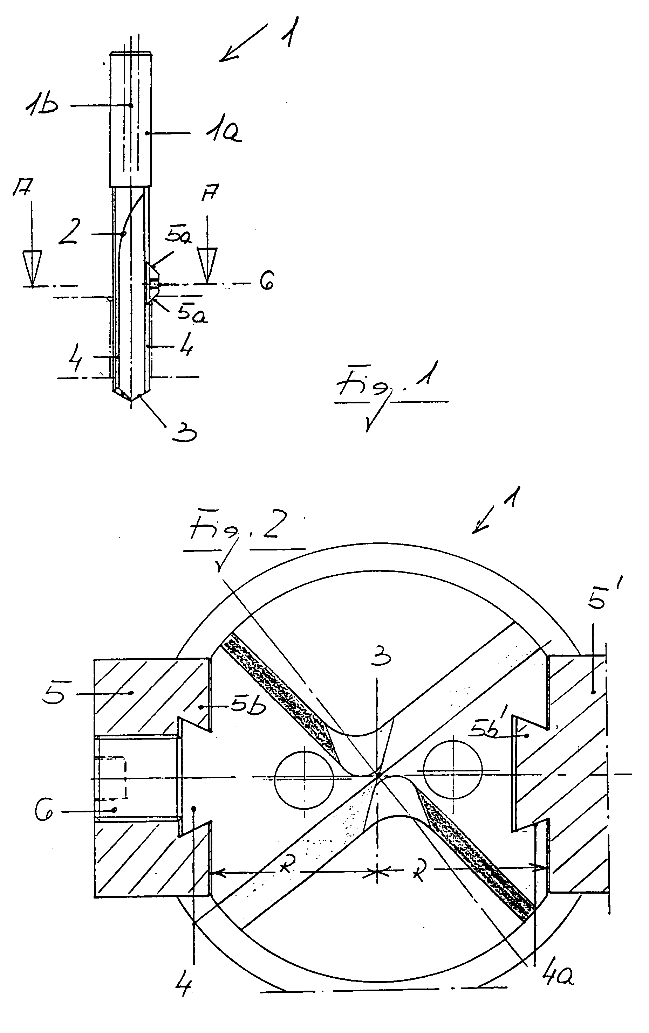

Das Bohrwerkzeug 1 besteht in seinem Grundaufbau aus dem Schaft 1a, dem Schneidteil 2 mit der Schneidspitze 3 und dem zu letzterer höhenverstellbar am Schneidteil 2 angeordneten, parallel bzw. in gleichem Radialabstand R zu dessen Längsachse 1b geführten Zusatzschneidglied 5.

Neu hierbei ist nun, daß das Zusatzschneidglied 5 mit seinem Fußteil 5b, 5b' an einer in dem Schneidteil 2 eingearbeiteten, parallel bzw. in gleichem Radialbstand R zu dessen Längsachse 1b verlaufenden Gleitbahn 4 bzw. 4a verschieb- oder feststellbar geführt ist, wobei die Gleitbahn als erhabene Führung 4 oder als entsprechend profilierte Nut 4a ausgebildet sein kann mit entsprechend auf oder in diese Gleitbahn 4 bzw. 4a dann passendem Fußteil 5b des Zusatzschneidgliedes 5. Baulich noch vorteilhafte Ausführungsvarianten dieser Erfindung bestehen darin, daß das Zusatzschneidglied 5 an seinen beiden Stirnseiten mit Schneiden 5a versehen und die Anordnung zweier diametral einander gegenüberliegender Gleitbahnen 4 bzw. 4a am Schneidteil 2 des Bohrwerkzeugs 1 vorgesehen ist.

Letzteres hat den Vorteil, daß man in verschiedenen Höhenstellungen unterschiedliche Zusatzschneidglieder aufsetzen und beispielsweise somit in einem Arbeitsgang Bohren, Aufbohren und Anfasen kann.

Die bei dem dargestellten, geradgenuteten Bohrwerkzeug 1 ebenfalls gerade und parallel zur Werkzeuglängsachse 1b ausgebildete Gleitbahn 4 bzw. 4a, muß bei Verwendung des erfinderischen Grundprinzips an spiralgenuteten Bohrern der Form letzterer derart angepaßt werden, daß die dortigen Gleitbahnen beispielsweise ebenfalls spiralförmig verlaufen, jedoch stets gleichen Radialabstand R zur Werkzeuglängsachse aufweisen.

### Bezugsziffernverzeichnis

- 1: Bohrwerkzeug
- 1a: Schaft
- 1b: Längsachse
- 2: Schneidteil
- 3: Spitze
- 4: Gleitbahn (erhaben)
- 4a: Gleitbahn (Nut)
- 5, 5': Zusatzschneidglied
- 5a: Schneide
- 5b, 5b': Fußteil
- 6: Klemmschraube
- R: Radialabstand

## Patentansprüche

1. Bohrwerkzeug mit einer Schneidspitze (3), einem Schneidteil (2) und mindestens einem am Schneidteil (2) parallel bzw. in gleichem Radialabstand (R) zu der Längsachse (1b) des Bohrwerkzeuges geführten und im Abstand zur Schneidspitze (3) höhenverstell- und feststellbar gehaltertem mit einer Schneide (5a) versehenen Zusatzchneidglied (5) zum Fasen, Senken, Planen, Aufbohren o. dgl.,
**dadurch gekennzeichnet,**
daß das Zusatzschneidglied (5) mit seinem Fußteil (5b, 5b') an einer in dem Schneidteil (2) eingearbeiteten Gleitbahn (4, 4a) mittels einer Schwalbenschwanz führung verschieb- und feststellbar geführt ist.

2. Bohrwerkzeug nach Anspruch 1,
**dadurch gekennzeichnet,**
daß das Zusatzschneidglied (5) an seinen beiden Stirnseiten mit Schneiden (5a) versehen ist.

3. Bohrwerkzeug nach mindestens einem der vorhergehenden Ansprüche,
**gekennzeichnet durch**
Anordnung zweier diametral einander gegenüberliegender Gleitbahnen (4 bzw. 4a) am Schneidteil (2).

4. Bohrwerkzeug nach Anspruch 1,
**dadurch gekennzeichnet,**
daß die Gleitbahn (4, 4a) am Nutenverlauf des jeweiligen Schneidteiles (2) angepaßt ist.

## Claims

1. Drilling tool with a cutting tip (3), a cutting tool (2) and at least one auxiliary cutting member (5), which is guided parallel or at a constant radial spacing (R) to the longitudinal axis (1b) of the drilling tool and which is provided with a cutter (5a) and held to be adjustable in height, and fixable, at a spacing from the cutting tip (3), for bevelling, countersinking, planing, boring or the like, characterised thereby that the auxiliary cutting member (5) is guided by its foot part (5b, 5b') by means of a dovetail guide to be slidable and fixable at a slideway (4, 4a) formed into the cutting part (2).

2. Drilling tool according to claim 1, characterised thereby that the auxiliary cutting member (5) is provided with cutters (5a) at its two end faces.

3. Drilling tool according to at least one of the preceding claims, characterised by arrangement of two slideways (4 and 4a) disposed diametrically opposite one another at the cutting part (2).

4. Drilling tool according to claim 1, characterised thereby that the slideway (4, 4a) is matched to the groove course of the respective cutting part (2).

## Revendications

1. Outil de perçage comportant une pointe de coupe (3), un élément de coupe (2) et au moins un organe de coupe supplémentaire (5) pour chanfreiner, lamer, surfacer, aléser ou analogues muni d'un tranchant (5a), qui guidé sur l'élément de coupe (2) parallèlement à celui-ci ou avec écart radial (R) constant par rapport à l'axe longitudinal (1b) de l'outil de perçage et qui maintenu de manière à pouvoir être ajusté en hauteur et immobilisé à distance de la pointe de coupe (3), caractérisé en ce que l'élément de coupe supplémentaire (5) est guidé avec son support (5b, 5b') sur une glissière (4, 4a) encastrée dans l'élément de coupe (2) de manière à pouvoir être déplacé et immobilisé au moyen d'un guide en queue d'aronde.

2. Outil de perçage selon la revendication 1, caractérisé en ce que l'organe de coupe supplémentaire (5) est muni de tranchants (5a) sur ses deux faces frontales.

3. Outil de coupe selon au moins l'une des revendications précédentes, caractérisé par une disposition de deux glissières (respectivement 4 et 4a) diamétralement opposées sur l'élément de coupe (2).

4. Outil de coupe selon la revendication 1, caractérisé en ce que la glissière (4, 4a) est adaptée à chacune des encoches de l'élément de coupe (2).
